# EUROPEAN PATENT APPLICATION

(11) **EP 4 809 811 A1**
(43) Date of publication of application: **23.09.2026**
(21) Application number: 24890512.7
(22) Date of filing: 01.11.2024
(51) Int. Cl.: A01D 34/74, A01D 34/54, A01D 34/28, A01D 34/24, A01D 34/00, A01D 75/00, A01D 101/00

(54) **LAWN MOWER**

(30) Priority: 13.11.2023 CN 202311506893
(71) Applicant: Changzhou Lymow Technology Co., Ltd., Jiangsu 213100 (CN)
(72) Inventor: GAO, Wangshu, hangzhou, Jiangsu 213100 (CN)
(74) Representative: Agca Kizil, Tugce
(86) International application number: PCT/CN2024/129335
(87) International publication number: WO 2025/103155

(57) **Abstract**

The present disclosure discloses a lawn mower. The lawn mower includes a main body (10) and a lifting and flipping assembly (20) connected to the main body (10). The lifting and flipping assembly (20) includes a lifting assembly and a flipping assembly, the lifting assembly includes a lifting drive device (201); the flipping assembly includes a sliding base (204), a cutter support (205) and a connecting rod assembly (206). The sliding base (204) is configured to perform lifting movement driven by the lifting drive device (201), the cutter support (205) is configured to be connected to a cutter assembly (30), the connecting rod assembly (206) is configured to connect the sliding base (204) and the cutter support (205), and be selectively in a lifting state or a flipping state. When the connecting rod assembly (206) is in the lifting state, the cutter support (205) is in an initial state, and when the connecting rod assembly (206) is in the flipping state, the cutter support (205) is in a flipping state. In the lawn mower, the sliding base (204) and the cutter support (205) are connected by the connecting rod assembly (206), and a single lifting drive device (201) may be used to realize two actions of automatic lifting and automatic flipping of the cutter assembly (30).

## Description

### TECHNICAL FIELD

The present disclosure relates to a lawn mower.

### BACKGROUND

Lawn mowers used for garden landscaping are gradually developing in the direction of automatic control to reduce labor costs. At present, in the use process, the lawn mowers on the market require manual adjustment of mowing height of a cutter, and when replacing or cleaning the cutter, the disassembly of the cutter is very laborious and often requires unlocking of multiple structures, resulting in complicated replacement and cleaning processes.

### SUMMARY OF THE INVENTION

At least one embodiment of the present disclosure provides a lawn mower, the lawn mower includes a main body and a lifting and flipping assembly connected to the main body. The lifting and flipping assembly includes a lifting assembly and a flipping assembly. The lifting assembly includes a lifting drive device. The flipping assembly includes a sliding base, a cutter support and a connecting rod assembly. The sliding base is configured to perform lifting movement driven by the lifting drive device; the cutter support is configured to be connected to a cutter assembly; and the connecting rod assembly is configured to connect the sliding base and the cutter support, and is configured to be controllably in a lifting state or a flipping state; When the connecting rod assembly is in the lifting state, the cutter support is in an initial state; when the connecting rod assembly is in the flipping state, the cutter support is in a flipping state.

In at least one embodiment, the lifting assembly further includes a lifting slide rail; the sliding base is slidably connected to the lifting slide rail, and is configured to be movable along the lifting slide rail driven by the lifting drive device to realize lifting movement.

In at least one embodiment, the flipping assembly further includes a limit device. The limit device is disposed on at least one side of the lifting slide rail. and configured to define a lifting track and a flipping track When the limit slider is in the lifting track, the connecting rod assembly is in the lifting state, and the cutter support is in the initial state, when the limit slider is in the flipping track, the connecting rod assembly is in the flipping state, and the cutter support is in the flipping state.

In at least one embodiment, the limit device includes a limit block disposed on at least one side of the lifting slide rail, the connecting rod assembly includes a main connecting rod, a first connecting rod and a second connecting rod. The main connecting rod has a first connecting end and a second connecting end, the first connecting end is hinged to the cutter support. The first connecting rod has a third connecting end and a fourth connecting end, the third connecting end is hinged to both the second connecting end and the sliding base. The second connecting rod has a fifth connecting end and a sixth connecting end, the fifth connecting end is hinged to the fourth connecting end, and the sixth connecting end is connected to the cutter support. the first connecting rod includes a limit fitting portion cooperating with the limit block, the limit fitting portion is configured to be rotatable around the limit block.

In at least one embodiment, the limit fitting portion is a limit groove, the first connecting rod further includes a protruding portion protruding toward the limit block, the limit slider is disposed on the protruding portion, and the limit slider is disposed opposite to the limit block.

In at least one embodiment, a hinged position between the third connecting end and the second connecting end is located at the limit groove, when the limit groove rotates around the limit block, the main connecting rod and the second connecting rod move relative to each other to push the cutter support to flip.

In at least one embodiment, the cutter support is connected with a first self-locking structure, the first connecting end is provided with a second self-locking structure cooperating with the first self-locking structure, when the cutter support is in the initial state, the first self-locking structure and the second self-locking structure achieve self-locking.

In at least one embodiment, the first self-locking structure includes a self-locking pin and a spring supporting the self-locking pin, the self-locking pin includes a first latching portion, the second self-locking structure includes a second latching portion latched with the first latching portion.

In at least one embodiment, the connecting rod assembly further includes: a third connecting rod, the third connecting rod has a seventh connecting end and an eighth connecting end, the seventh connecting end is hinged to the sixth connecting end, and the eighth connecting end is hinged to the first connecting end.

In at least one embodiment, the third connecting rod is provided with a pushing portion disposed toward the first self-locking structure, when the limit slider moves to the limit block and is subjected to force, the first connecting rod, the second connecting rod and the third connecting rod are subjected to a force, the pushing portion pushes the first self-locking structure to unlock the first self-locking structure and the second self-locking structure.

In at least one embodiment, the limit device includes a limit slide rail disposed on at least one side of the lifting slide rail, the limit slide rail has a straight portion and a bent portion being respectively configured to define the lifting track and the flipping track, the limit slider is slidably connected to the limit slide rail.

In at least one embodiment, the connecting rod assembly includes a fourth connecting rod and a fifth connecting rod. The fourth connecting rod has a ninth connecting end and a tenth connecting end that are opposite to each other, the ninth connecting end is slidably connected to the limit slide rail and includes the limit slider, the tenth connecting end is hinged to the cutter support. The fifth connecting rod has an eleventh connecting end and a twelfth connecting end that are opposite to each other, the eleventh connecting end is hinged to the sliding base, and the twelfth connecting end is hinged to the cutter support. A middle portion of the fourth connecting rod has a shaft hole, the sliding base is connected with a sliding base connecting rod, and an end of the sliding base connecting rod is hinged to the shaft hole.

In at least one embodiment, the limit device includes a limit sliding slot disposed on at least one side of the lifting slide rail, the limit sliding slot has an opening portion configured to define the flipping track.

In at least one embodiment, the limit slider is slidably connected to the lifting slide rail. The connecting rod assembly includes a sliding rod, a sixth connecting rod and a seventh connecting rod. The sliding rod has a thirteenth connecting end, a fourteenth connecting end, and a sliding guide portion disposed between the thirteenth connecting end and the fourteenth connecting end, a thirteenth connecting end and a fourteenth connecting end that are opposite to each other, and the thirteenth connecting end is hinged to an end of the limit slider. The sixth connecting rod has a fifteenth connecting end and a sixteenth connecting end, the fifteenth connecting end is hinged to the fourteenth connecting end, and the sixteenth connecting end is hinged to the cutter support. The seventh connecting rod has a fifteenth connecting end and a sixteenth connecting end, the fifteenth connecting end is fixed to the sliding base and slidably connected to the sliding guide portion, and the sixteenth connecting end is hinged to the cutter support.

In at least one embodiment, the sliding rod has a limit rotation block cooperating with the opening portion. When the limit rotation block moves to the opening portion, the fifteenth connecting end of the seventh connecting rod slides along the sliding guide portion, the sliding rod drives the limit rotation block to rotate within the opening portion, and the cutter support flips.

In at least one embodiment, the lifting drive device includes a drive motor and a lead screw connected to an output end of the drive motor; the sliding base is provided with a transmission portion in a threaded connection with the lead screw.

In at least one embodiment, the lifting drive device further includes an encoder; the encoder is configured to record the number of revolutions of the drive motor for obtaining a state of the cutter support.

In at least one embodiment, the lifting slide rail includes a slider slide rail, an optical axis slide rail or a sliding slot slide rail.

In at least one embodiment, the lawn mower further includes a cutter assembly and a sensor. The cutter assembly is connected to the cutter support; the sensor is disposed on the lifting assembly or the flipping assembly, and is configured to detect a state of the cutter assembly.

### BRIEF DESCRIPTION OF THE DRAWINGS

In order to illustrate the technical solutions of the embodiments of the present disclosure more clearly, the drawings of the embodiments will be briefly introduced below. The drawings described below are intended to illustrate some embodiments of the present disclosure and do not limit the present disclosure.
FIG. 1 is a schematic structural view of a lawn mower provided by one embodiment of the present disclosure;
FIG. 2 is a schematic structural view of a lifting and flipping assembly of a lawn mower provided by one embodiment of the present disclosure;
FIG. 3 is a schematic structural view of a lifting and flipping assembly of a lawn mower provided by one embodiment of the present disclosure in a flipping state;
FIG. 4A is a schematic side view of a lifting and flipping assembly of a lawn mower provided by one embodiment of the present disclosure in a lifting state;
FIG. 4B is a schematic side view of a lifting and flipping assembly of a lawn mower provided by one embodiment of the present disclosure in a flipping state;
FIG. 5A is a schematic rear structural view of a lifting and flipping assembly of a lawn mower provided by one embodiment of the present disclosure in a lifting state;
FIG. 5B is a schematic rear structural view of a lifting and flipping assembly of a lawn mower provided by one embodiment of the present disclosure in a flipping state;
FIG. 6 and FIG. 7 are schematic structural views of a lifting and flipping assembly of a lawn mower provided by another embodiment of the present disclosure;
FIG. 8 is a schematic structural view of a lifting and flipping assembly of a lawn mower provided by another embodiment of the present disclosure in a flipping state;
FIG. 9 and FIG. 10 are schematic structural views of a lifting and flipping assembly of a lawn mower provided by one more embodiment of the present disclosure; and
FIG. 11 is a schematic structural view of a lifting and flipping assembly of a lawn mower provided by one more embodiment of the present disclosure in a flipping state.

### DETAILED DESCRIPTION

To make the objectives, technical solutions and advantages of the embodiments of the present disclosure clearer, the technical solutions of the embodiments of the present disclosure will be clearly and completely described below with reference to the drawings of the embodiments of the present disclosure. The described embodiments are some embodiments of the present disclosure, rather than all embodiments. Other embodiments obtained by a person of ordinary skill in the art based on the described embodiments of the present disclosure without creative efforts shall fall within the protection scope of the present disclosure.

Technical or scientific terms used in the present disclosure shall have the ordinary meanings understood by a person of ordinary skill in the art to which the present disclosure belongs. The terms "first", "second" and similar words used in the present disclosure do not indicate any order, quantity or importance, but are used to distinguish different components. Words such as "include" or "comprise" mean that the element or article appearing before the word covers the element or article listed after the word and equivalents thereof, and do not exclude other elements or articles. Words such as "connected" or "linked" are not limited to physical or mechanical connections, but may include electrical connections, whether direct or indirect. "Upper", "lower", "left", "right" and the like are used to indicate relative positional relationships, and when the absolute position of the described object is changed, the relative positional relationships may also be changed accordingly.

As mentioned above, in the use process, the lawn mowers on the market require manual adjustment of mowing height of a cutter, and when replacing or cleaning the cutter, the disassembly of the cutter is very laborious and often requires unlocking of multiple structures, resulting in complicated replacement and cleaning processes.

At least one embodiment of the present disclosure provides a lawn mower, the lawn mower includes a main body and a lifting and flipping assembly connected to the main body, the lifting and flipping assembly includes a lifting assembly and a flipping assembly, the lifting assembly includes a lifting drive device, the flipping assembly includes a sliding base, a cutter support and a connecting rod assembly. The sliding base is configured to perform lifting movement driven by the lifting drive device, the cutter support is configured to be connected to a cutter assembly, the connecting rod assembly is configured to connect the sliding base and the cutter support, and be selectively in a lifting state or a flipping state. When the connecting rod assembly is in the lifting state, the cutter support is in an initial state, and when the connecting rod assembly is in the flipping state, the cutter support is in a flipping state.

In the lawn mower provided by the embodiment of the present disclosure, the sliding base and the cutter support are connected by the connecting rod assembly, and a single lifting drive device may be used to realize two actions of automatic lifting and automatic flipping of the cutter assembly. The automatic lifting action can accurately control the height of the cutter assembly, such as ground clearance. And the automatic flipping can quickly, conveniently and rapidly flip the cutter assembly to change the state of the cutter assembly, such as exposing the cutter assembly for easy cleaning and replacement of the cutter assembly.

The lawn mower provided by the embodiment of the present disclosure will be described below through several embodiments.

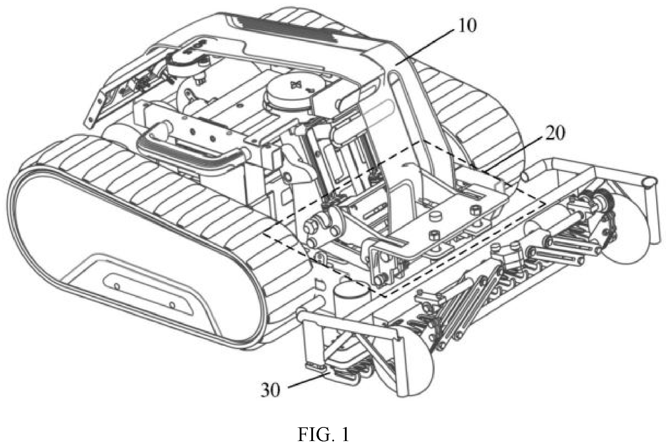

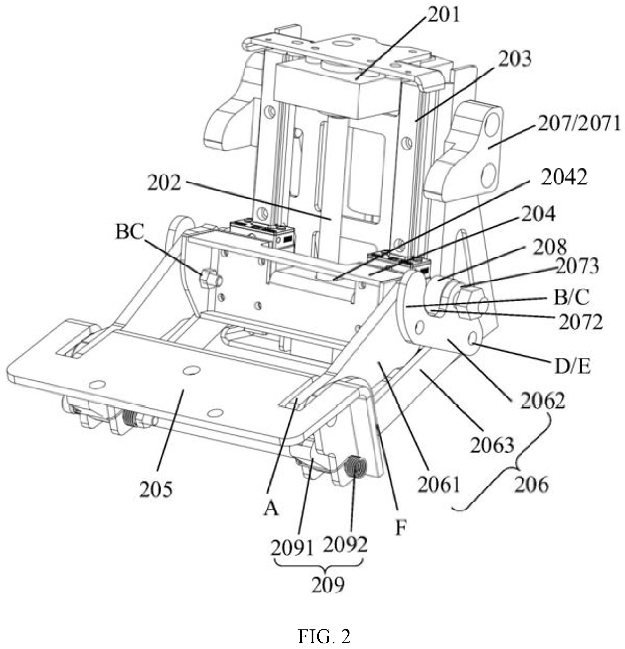

At least one embodiment of the present disclosure provides a lawn mower, FIG. 1 shows a schematic structural view of the lawn mower, and FIG. 2 shows a schematic structural view of a lifting and flipping assembly of the lawn mower. With reference to FIG. 1, the lawn mower includes a main body 10 and a lifting and flipping assembly 20 connected to the main body 10.

In at least one embodiment, the main body 10 may include a housing and a drive device (for driving the lawn mower to travel), a power supply device (for supplying power to the lawn mower) and a control device (such as a controller) located inside the housing, and the main body 10 is further connected with a movement device (such as a crawler) to drive the lawn mower to walk. The embodiment of the present disclosure does not limit the structure of the main body 10.

In at least one embodiment, with reference to FIG. 2, the lifting and flipping assembly 20 includes a lifting assembly and a flipping assembly, and the lifting assembly includes a lifting drive device 201. In at least one embodiment, the lifting drive device 201 may include a drive motor and a lead screw 202 connected to an output end of the drive motor, and the drive motor can drive the lead screw 202 to rotate. In at least one embodiment, the extension direction of the lead screw 202 is a vertical direction, or slightly inclined toward the main body 10 from the vertical direction, to realize lifting movement. In at least one embodiment, the lifting drive device 201 may further include an encoder configured to record the number of revolutions of the drive motor for obtaining a drive state of the drive motor, and further obtain a state of the cutter support 205, such as lifting height and position.

In at least one embodiment, with reference to FIG. 2, the flipping assembly includes a sliding base 204, a cutter support 205 and a connecting rod assembly 206. The sliding base 204 is configured to perform lifting movement driven by the lifting drive device 201. In at least one embodiment, the sliding base 204 includes a transmission portion 2041 in a threaded connection with the lead screw 202, the lead screw 202 is in threaded fit with the transmission portion 2041, and when the drive motor drives the lead screw 202 to rotate, the transmission portion 2041 can move up or down along the lead screw 202. In at least one embodiment, the transmission portion 2041 may be a part of the body of the sliding base 204, such as a part of the body of the sliding base 204 is provided with threads to be in threaded fit with the lead screw 202, or the transmission portion 2041 may also be an additional structure separately connected to the sliding base 204, such as a lead screw nut separately provided.

In at least one embodiment, with reference to FIG. 1 and FIG. 2, the cutter support 205 is configured to be connected to a cutter assembly 30, that is, the cutter assembly 30 may be fixed on the cutter support 205. The connecting rod assembly 206 is configured to connect the sliding base 204 and the cutter support 205, and be selectively (such as controlled by the lifting drive device 201) in a lifting state or a flipping state. In at least one embodiment, when the connecting rod assembly 206 is in the lifting state, the cutter support 205 is in an initial state, for example, in the initial state, the cutter assembly 30 may be in a horizontally placed state. When the connecting rod assembly 206 is in the flipping state, the cutter support 205 is in a flipping state, for example, in the flipping state, the cutter assembly 30 may be in a state rotated by a certain angle, such as a state rotated by about 90 degrees.

In at least one embodiment, with reference to FIG. 1, the lawn mower further includes a cutter assembly 30, and the cutter assembly 30 may be fixed to the cutter support 205 by bolts. In at least one embodiment, the cutter assembly 30 may include various forms of cutters such as scissor-type cutters and disc-type cutters, and the embodiment of the present disclosure does not limit the form of the cutter assembly 30.

In the embodiment of the present disclosure, the lifting and flipping assembly can realize automatic lifting and flipping actions driven by the lifting drive device 201. Or the lifting and flipping assembly can passively realize lifting and flipping actions when the lawn mower encounters a rough road surface. For example, when the lawn mower encounters a steep slope, the sliding base 204 may be passively lifted to adapt to the road surface, achieving a better mowing effect, and protecting the cutter assembly 30.

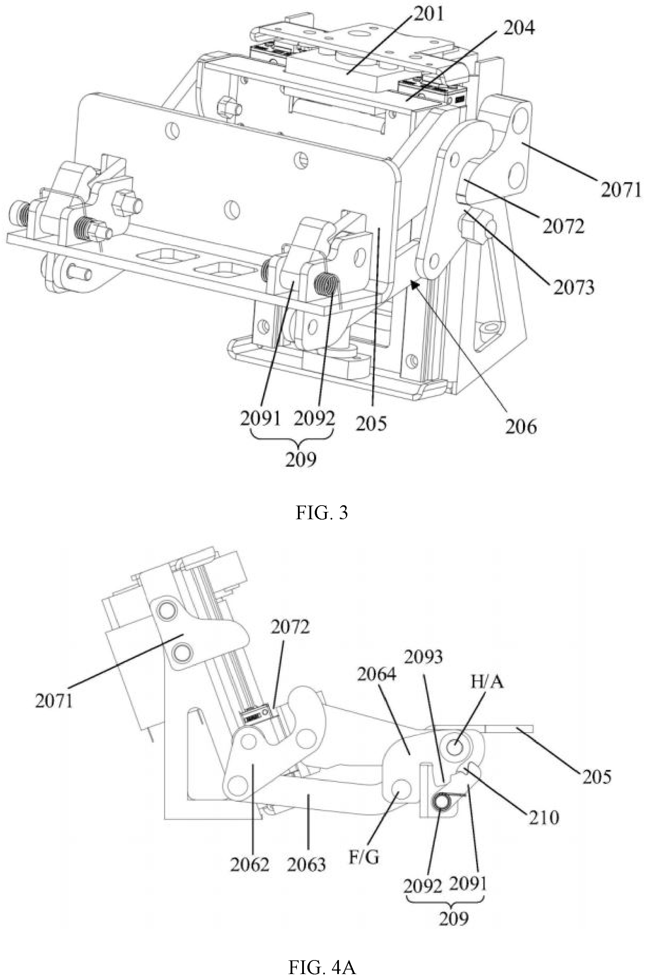

FIG. 2 shows a schematic structural view of a lifting and flipping assembly, with reference to FIG. 2, the connecting rod assembly 206 is in a lifting state, and the cutter support 205 is in an initial state. FIG. 3 shows a schematic view of the above lifting and flipping assembly in a flipping state, with reference to FIG. 3, the connecting rod assembly 206 is in a flipping state, and the cutter support 205 is in a flipping state, which will be described in detail below.

In at least one embodiment, with reference to FIG. 2, the lifting assembly may further include a lifting slide rail 203. The sliding base 204 is slidably connected to the lifting slide rail 203, and is configured to be movable along the lifting slide rail 203 under the drive of the lifting drive device 201 to realize lifting movement, such as linear movement or approximately linear movement. In at least one embodiment, the lifting slide rail 203 may be a slider slide rail, an optical axis slide rail or a sliding slot slide rail, and the embodiment of the present disclosure does not limit the form of the lifting slide rail 203. With reference to FIG. 2, the lifting slide rail is a slider slide rail.

In at least one embodiment, the extension direction of the lifting track defined by the lifting slide rail 203 is the same as that of the lead screw 202, to limit the movement freedom of the sliding base 204. So that the sliding base 204 can move stably along the track defined by the lifting slide rail 203 and the lead screw 202, and improve the movement stability of the sliding base 204.

In at least one embodiment, with reference to FIG. 2, the flipping assembly may further include a limit device 207, and the limit device 207 is disposed on at least one side of the lifting slide rail 203, such as on both sides of the lifting slide rail 203 and symmetrically disposed. The limit device 207 is configured to define a lifting track and a flipping track.

In at least one embodiment, the sliding base 204 is connected with a limit slider 208 cooperating with the limit device 207. With reference to FIG. 2, when the limit slider 208 is not in contact with the limit device 207, the track for the limit slider 208 is the lifting track defined by the limit device 207. When the limit slider 208 is in the lifting track, the connecting rod assembly 206 is in the lifting state, and the cutter support 205 is in the initial state, that is, the state shown in FIG. 2. When the limit slider 208 is in contact with the limit device 207 and force is exerted between the limit slider 208 and the limit device 207, the track for the limit slider 208 is the flipping track defined by the limit device 207. When the limit slider 208 is in the flipping track, the connecting rod assembly 206 is in the flipping state, and the cutter support 205 is in the flipping state, that is, the state shown in FIG. 3.

In at least one embodiment, with reference to FIG. 2, the limit device 207 includes a limit block 2071 disposed on at least one side of the lifting slide rail 203, such as limit blocks 2071 disposed on at least both sides of the lifting slide rail 203 and symmetrically disposed. At this time, when the limit slider 208 is below the limit block 2071 and reaches the limit block 2071, the track defined by the limit block 2071 is the lifting track. When the limit slider 208 reaches the limit block 2071 and then interacts with the limit block 2071 by force, the track defined by the limit block 2071 is the flipping track.

In at least one embodiment, with reference to FIG. 2, the connecting rod assembly 206 includes a main connecting rod 2061, a first connecting rod 2062 and a second connecting rod 2063. The main connecting rod 2061 has a first connecting end *A* and a second connecting end *B*, the first connecting end *A* is hinged to the cutter support 205. The first connecting rod 2062 has a third connecting end *C* and a fourth connecting end *D*, the third connecting end *C* is hinged to the second connecting end *B* and hinged to the sliding base 204, such as a hinged point at a position indicated by mark *BC*. The second connecting rod 2063 has a fifth connecting end *E* and a sixth connecting end *F*, the fifth connecting end *E* is hinged to the fourth connecting end *D*, and the sixth connecting end *F* is connected to the cutter support 205.

It should be noted that in the embodiment of the present disclosure, "connection" between one structure and another structure may be direct connection or indirect connection, as long as the two have a certain degree of mutual constraint. And "hinge" between one structure and another structure may be direct hinge or indirect hinge, as long as the two can rotate relative to each other, and the embodiment of the present disclosure does not limit the form of "connection/hinge".

With reference to FIG. 2 and FIG. 3, the first connecting rod 2062 includes a limit fitting portion cooperating with the limit block 2071. In at least one embodiment, the limit fitting portion may be a limit groove 2072, and the limit fitting portion (such as the limit groove 2072) is configured to be rotatable around the limit block 2071. At this time, the first connecting rod 2062 rotates relative to both the main connecting rod 2061 and the second connecting rod 2063, so that the relative position of the sliding base 204 and the cutter support 205 changes, and the cutter support 205 flips. In other embodiments, the limit fitting portion may also be other forms capable of cooperating with the limit block 2071, such as a structure with an arc edge or a linear edge capable of cooperating with an edge of the limit block 2071.

In at least one embodiment, with reference to FIG. 2 and FIG. 3, the first connecting rod 2062 further includes a protruding portion 2073 protruding toward the limit block 2071, the limit slider 208 is disposed on the protruding portion 2073 and the limit slider 208 is disposed opposite to the limit block 2071. When the limit slider 208 reaches the limit block 2071, the limit slider 208 first contacts the limit block 2071; and when the lifting drive device 201 continues to drive upward, the limit block 2071 exerts a blocking force on the limit slider 208, so that the limit slider 208 does not continue to rise, but promotes the limit groove 2072 to rotate around the limit block 2071 to realize a flipping action.

In at least one embodiment, with reference to FIG. 2 and FIG. 3, a hinged position between the third connecting end *C* and the second connecting end *B* is located at the limit groove 2072, that is, disposed beside the limit groove 2072. When the limit groove 2072 rotates around the limit block 2071, the main connecting rod 2061 and the second connecting rod 2063 move relative to each other, and the second connecting rod 2063 pushes the cutter support 205 to flip.

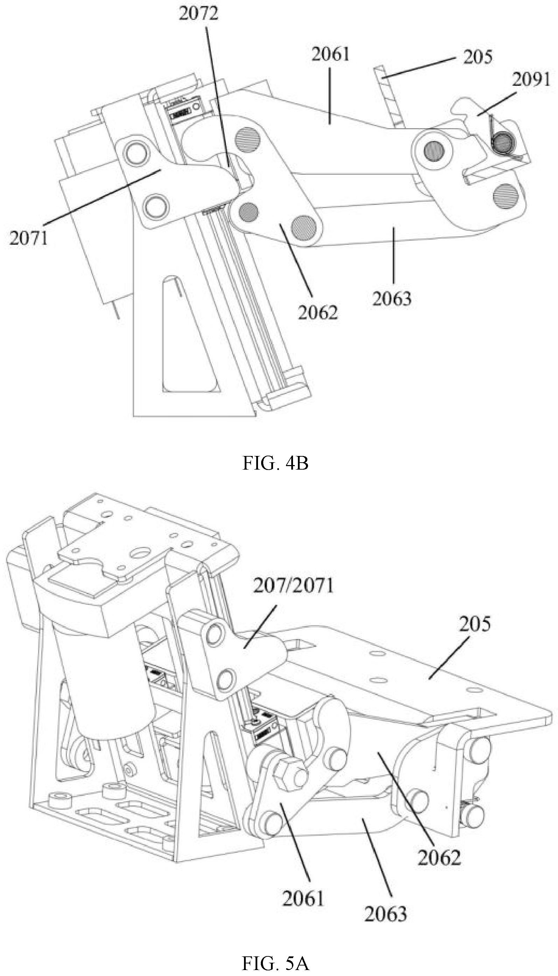

In at least one embodiment, with reference to FIG. 2 and FIG. 3, the cutter support 205 is connected with a first self-locking structure 209. FIG. 4A and FIG. 4B respectively show schematic side views of the lifting and flipping assembly in a lifting state and a flipping state. With reference to FIG. 4A, the first connecting end *A* has a second self-locking structure 210 cooperating with the first self-locking structure 209, and when the cutter support 205 is in the initial state, the first self-locking structure 209 and the second self-locking structure 210 achieve self-locking, that is, the state shown in FIG. 4A.

In at least one embodiment, with reference to FIG. 2 to FIG. 4A, the first self-locking structure 209 includes a self-locking pin 2091 and a spring 2092 supporting the self-locking pin 2091, the self-locking pin 2091 includes a first latching portion, the second self-locking structure 210 includes a second latching portion latched with the first latching portion. In a state where the first self-locking structure 209 and the second self-locking structure 210 achieve self-locking, the first latching portion and the second latching portion are latched together, to keep the cutter support 205 in the initial state and prevent the cutter assembly 30 from being unexpectedly tilted up by obstacles when encountering obstacles.

In at least one embodiment, with reference to FIG. 4A, the connecting rod assembly 206 may further include a third connecting rod 2064, the third connecting rod 2064 has a seventh connecting end *G* and an eighth connecting end *H*, the seventh connecting end *G* is hinged to the sixth connecting end *F*, and the eighth connecting end *H* is hinged to the first connecting end *A*.

In at least one embodiment, with reference to FIG. 4A, the third connecting rod 2064 includes a pushing portion 2093 disposed toward the first self-locking structure 209. When the limit slider 208 moves to the limit block 2071 and is subjected to force, the first connecting rod 2062, the second connecting rod 2063 and the third connecting rod 2064 are subjected to a force, the pushing portion 2093 exerts a pushing force on the first self-locking structure 209 to push the first self-locking structure 209, such as pushing the self-locking pin 2091, to unlock the first self-locking structure 209 and the second self-locking structure 210, such as disconnecting the clamping between the first latching portion and the second latching portion, to facilitate the transition of the cutter support 205 from the lifting state to the flipping state.

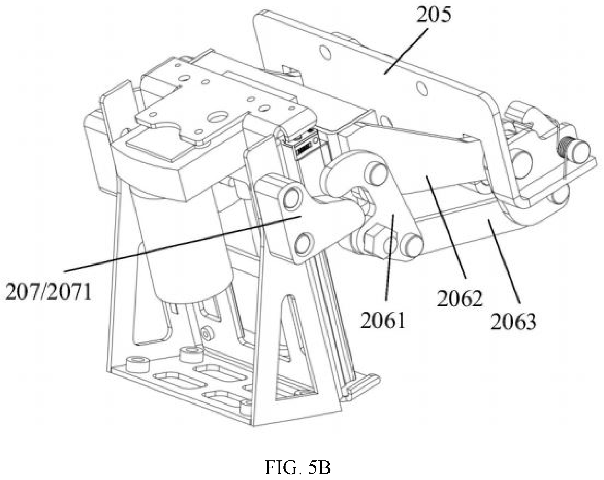

In at least one embodiment, FIG. 5A and FIG. 5B respectively show schematic rear structural views of the lifting and flipping assembly in a lifting state and a flipping state. With reference to FIG. 2, FIG. 3, FIG. 4A, FIG. 4B, FIG. 5A and FIG. 5B, when the cutter support 205 is in the initial state, the cutter assembly 30 connected to the cutter support 205 may be in a working state (as shown in FIG. 1), such as a mowing state. At this time, the first self-locking structure 209 and the second self-locking structure 210 achieve self-locking to keep the cutter assembly 30 stable. After the lifting drive device 201 drives the sliding base 204 to rise, the cutter support 205 drives the cutter assembly 30 to rise. When the limit slider 208 reaches the limit block 2071 and the lifting drive device 201 continues to drive, the first self-locking structure 209 and the second self-locking structure 210 are pushed by the pushing portion 2093 to realize unlocking. At this time, the lifting drive device 201 continues to drive, the limit groove 2072 rotates around the limit block 2071. At this time, the first connecting rod 2062 rotates relative to both the main connecting rod 2061 and the second connecting rod 2063, so that the relative position of the sliding base 204 and the cutter support 205 changes, and the cutter support 205 drives the cutter assembly 30 to flip. At this time, operations such as replacement and cleaning of the cutter assembly 30 may be performed.

In at least one embodiment, after the lifting and flipping assembly returns from the flipping state to the lifting state, under the elastic force of the spring 2092 of the first self-locking structure 209. The first latching portion of the first self-locking structure 209 and the second latching portion of the second self-locking structure 210 are automatically latched, to achieve self-locking of the first self-locking structure 209 and the second self-locking structure 210.

In the lawn mower provided by the embodiment of the present disclosure, the sliding base 204 and the cutter support 205 are connected by the connecting rod assembly 206, and a single lifting drive device 201 may be used to realize two actions of automatic lifting and automatic flipping of the cutter assembly 30. The automatic lifting action can accurately control the height of the cutter assembly 30, such as ground clearance, to cope with rugged environments, such as steep slopes. The automatic flipping can quickly, conveniently and rapidly flip the cutter assembly 30, such as exposing the cutter assembly 30 for easy cleaning and replacement of the cutter assembly 30.

In other embodiments, the limit device 207, the limit slider 208, the connecting rod assembly 206 and other components may also adopt other forms.

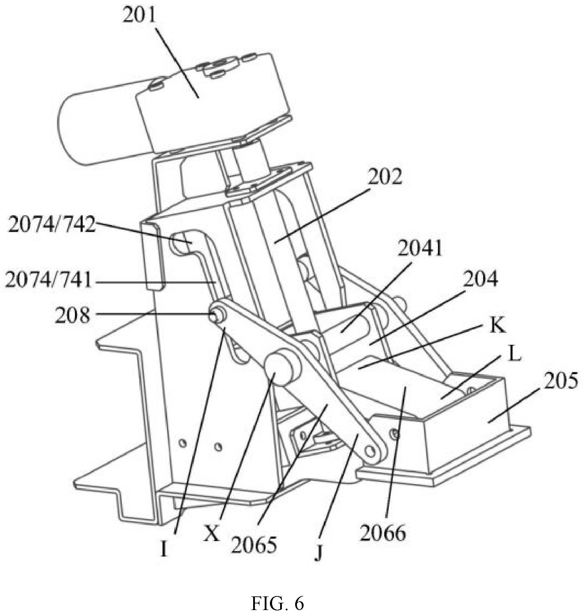

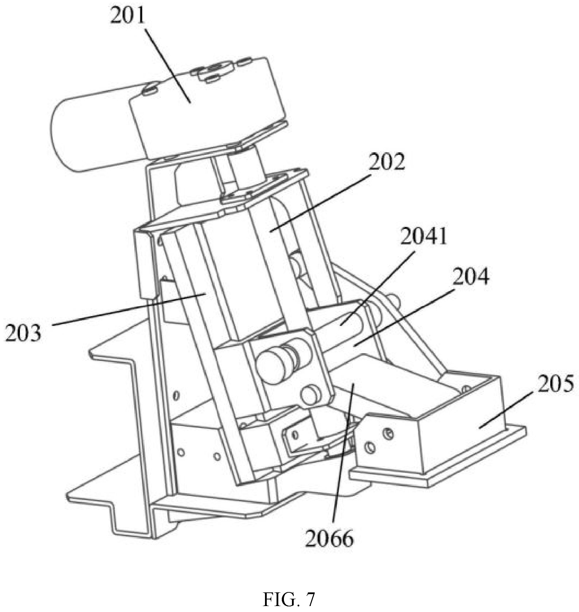

FIG. 6 and FIG. 7 show schematic structural views of a lifting and flipping assembly in a lawn mower provided by another embodiment of the present disclosure. FIG. 7 removes some external structures compared with FIG. 6, such as the limit slide rail 2074, the fourth connecting rod 2065 or the like.

With reference to FIG. 6 and FIG. 7, the limit device 207 includes a limit slide rail 2074 disposed on at least one side of the lifting slide rail 203. In at least one embodiment, the limit device 207 includes limit slide rails 2074 disposed on both sides of the lifting slide rail 203 and symmetrically disposed. The limit slide rail 2074 has a straight portion 741 and a bent portion 742 respectively configured to define a lifting track and a flipping track, and the limit slider 208 is slidably connected to the limit slide rail 2074.

In at least one embodiment, when the limit slider 208 slides on the straight portion 741, the connecting rod assembly 206 is in a lifting state, the cutter support 205 is in an initial state, and the cutter assembly 30 connected to the cutter support 205 may be in a working state, such as a mowing state. In at least one embodiment, when the limit slider 208 slides on the bent portion 742, the connecting rod assembly 206 is in a flipping state, the cutter support 205 is in a flipping state, and the cutter assembly 30 connected to the cutter support 205 flips; at this time, operations such as replacement and cleaning of the cutter assembly 30 may be performed.

In at least one embodiment, with reference to FIG. 6 and FIG. 7, the lifting slide rail 203 adopts a sliding slot slide rail, such as a dovetail sliding slot slide rail.

In at least one embodiment, with reference to FIG. 6 and FIG. 7, the connecting rod assembly 206 includes a fourth connecting rod 2065 and a fifth connecting rod 2066. The fourth connecting rod 2065 has a ninth connecting end *I* and a tenth connecting end *J* that are opposite to each other, the ninth connecting end *I* is slidably connected to the limit slide rail 2074 and includes the limit slider 208. In at least one embodiment, the limit slider 208 is formed on an end of the ninth connecting end *I* of the fourth connecting rod 2065. In other embodiments, the limit slider 208 may be additionally provided at the ninth connecting end *I*. The tenth connecting end *J* is hinged to the cutter support 205, the fifth connecting rod 2066 has an eleventh connecting end *K* and a twelfth connecting end *L* that are opposite to each other, the eleventh connecting end *K* is hinged to the sliding base 204, and the twelfth connecting end *L* is hinged to the cutter support 205. A middle portion of the fourth connecting rod 2065 has a shaft hole *X*, the sliding base 204 is connected with a sliding base connecting rod 2041, and an end of the sliding base connecting rod 2041 is hinged to the shaft hole *X*.

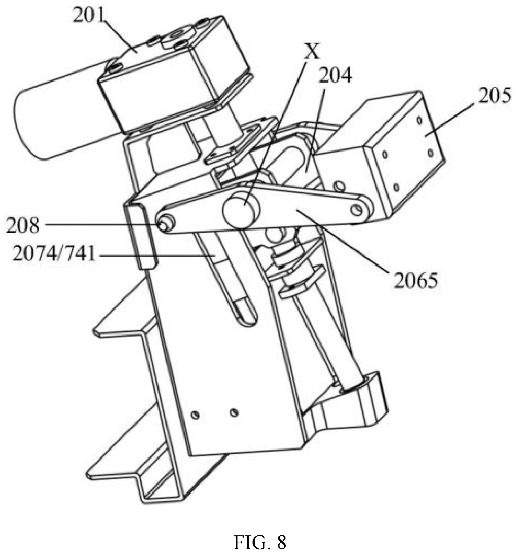

With reference to FIG. 6 and FIG. 7, when the lifting drive device 201 drives the sliding base 204 and the limit slider 208 slides on the straight portion 741 of the limit slide rail 2074, the connecting rod assembly 206 is in a lifting state, and the cutter support 205 is in an initial state. With reference to FIG. 8, when the lifting drive device 201 continues to drive the sliding base 204 to rise and the limit slider 208 slides to the bent portion 742 of the limit slide rail 2074, the connecting rod assembly 206 is in a flipping state, and the cutter support 205 is in a flipping state.

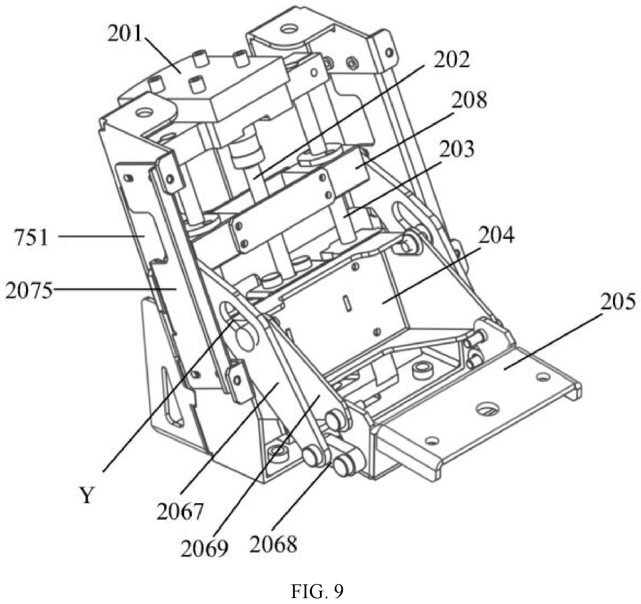

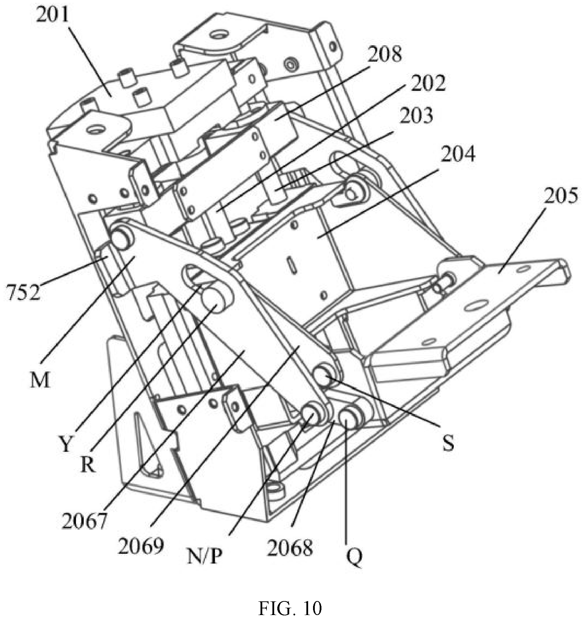

FIG. 9 and FIG. 10 show schematic structural views of a lifting and flipping assembly in a lawn mower provided by one more embodiment of the present disclosure. FIG. 10 removes some external structures compared with FIG. 9, such as the limit sliding slot 2075.

With reference to FIG. 9 and FIG. 10, the limit device 207 includes a limit sliding slot 2075 disposed on at least one side of the lifting slide rail 203, and the limit sliding slot 2075 has an opening portion 751 configured to define a flipping track. In at least one embodiment, with reference to FIG. 9 and FIG. 10, the lifting slide rail 203 adopts an optical axis slide rail. In at least one embodiment, there are two optical axis slide rails symmetrically disposed on both sides of the lead screw 202.

In at least one embodiment, with reference to FIG. 9 and FIG. 10, the limit slider 208 is slidably connected to the lifting slide rail 203, the connecting rod assembly 206 includes a sliding rod 2067, a sixth connecting rod 2068 and a seventh connecting rod 2069. The sliding rod 2067 has a thirteenth connecting end *M,* a fourteenth connecting end *N,* and a sliding guide portion *Y* disposed between the thirteenth connecting end *M* and the fourteenth connecting end *N.* The thirteenth connecting end *M* and the fourteenth connecting end *N* are opposite to each other, the thirteenth connecting end *M* is hinged to an end of the limit slider 208. The sixth connecting rod 2068 has a fifteenth connecting end *P* and a sixteenth connecting end *Q*, the fifteenth connecting end *P* is hinged to the fourteenth connecting end *N*, and the sixteenth connecting end *Q* is hinged to the cutter support 205. The seventh connecting rod 2069 has a fifteenth connecting end *R* and a sixteenth connecting end *S*, the fifteenth connecting end *R* is fixed to the sliding base 204 and slidably connected to the sliding guide portion *Y*, and the sixteenth connecting end *S* is hinged to the cutter support 205.

In at least one embodiment, the sliding rod 2067 has a limit rotation block 752 cooperating with the opening portion 751, the limit rotation block 752 can move along the limit sliding slot 2075. When the limit rotation block 752 moves to the opening portion 752, the fifteenth connecting end *R* of the seventh connecting rod 2068 slides along the sliding guide portion *Y*, the sliding rod 2067 drives the limit rotation block 752 to rotate within the opening portion 751, and the cutter support 205 flips.

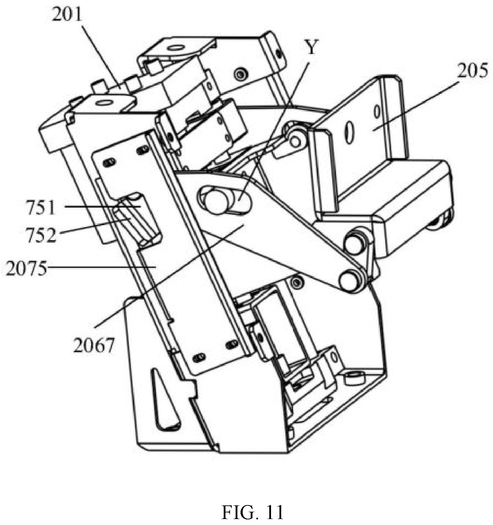

With reference to FIG. 9 and FIG. 10, when the lifting drive device 201 drives the sliding base 204 and the limit rotation block 752 slides on a non-opening portion 751 of the limit sliding slot 2075, the connecting rod assembly 206 is in a lifting state, the cutter support 205 is in an initial state, and the cutter assembly 30 connected to the cutter support 205 may be in a working state, such as a mowing state. With reference to FIG. 11, when the lifting drive device 201 continues to drive the sliding base 204 to rise and the limit rotation block 752 slides to the opening portion 751, and the lifting drive device 201 continues to drive, the fifteenth connecting end *R* of the seventh connecting rod 2068 slides along the sliding guide portion *Y*, the limit rotation block 752 rotates within the opening portion 751, the connecting rod assembly 206 is in a flipping state, and the cutter support 205 is in a flipping state. At this time, the cutter assembly 30 connected to the cutter support 205 flips, and operations such as replacement and cleaning of the cutter assembly 30 may be performed.

In at least one embodiment, the lawn mower may further include a sensor (not shown); the sensor may be disposed on the lifting assembly or the flipping assembly, and the sensor may be configured to detect a working state of the lifting assembly or the flipping assembly, and detect state of the cutter assembly 30.

In at least one embodiment, the sensor may be a displacement sensor or a contact sensor, such as a photoelectric encoder, a magnetic encoder, a Hall element, a micro switch, etc.. The displacement sensor or the contact sensor may be installed at both ends of the lifting track for detecting whether the lifting and flipping assembly completes a preset action, and further detecting which state the cutter assembly 30 is in. In other embodiments, the displacement sensor or the contact sensor may be installed near a rotating shaft of a rotatable assembly for sensing changes in angle or angular velocity, and further obtaining relevant state information of the lifting assembly or the flipping assembly. In other embodiments, the sensor may be a current sensor or a voltage sensor disposed at an output end of the drive motor 201, for sensing whether there is a load or a stall occurs by monitoring current and voltage of the drive motor, to judge a state of the cutter assembly 30. In other embodiments, the sensor may be a mechanical sensor disposed on the lifting and rotating assembly, for judging a current state by sensing material deformation or pressure. The embodiment of the present disclosure does not limit the form of the sensor.

In at least one embodiment, the lawn mower may further include a controller (not shown), the controller may be disposed inside the main body 10. The controller is configured to communicate with the lifting drive device 201 and the sensor, and receive detection information of the sensor and control the lifting drive device 201 according to the detection information of the sensor, such as controlling a drive motor of the lifting drive device 201 to rotate forward or reversely. The controller is further configured to control the cutter support 205 to be in a lifting state or a flipping state, to realize automatic lifting and flipping actions of the lawn mower.

In at least one embodiment, the controller may be a central processing unit (CPU), a network processor (NP), etc.. In at least one embodiment, the controller may also be a digital signal processor (DSP), an application specific integrated circuit (ASIC), a field programmable gate array (FPGA) or other programmable logic devices, discrete gate or transistor logic devices, discrete hardware components. The central processing unit (CPU) may be of X86 or ARM architecture, etc. The embodiment of the present disclosure does not limit the form of the controller.

The following points need to be explained:
(1) The drawings of the embodiments of the present disclosure relate to structures related to the embodiments of the present disclosure, and other structures can refer to conventional designs.
(2) For clarity, in the drawings used to describe the embodiments of the present disclosure, the thickness of layers or regions is enlarged or reduced, that is, these drawings are not drawn according to actual scales. It may be understood that when an element is referred to as being "on" or "under" another element, it may be "directly" on or under the other element, or intervening elements may be present.
(3) In the case of no conflict, the embodiments of the present disclosure and features in the embodiments may be combined with each other to obtain new embodiments.

The above are implementations of the present disclosure, but the protection scope of the present disclosure is not limited thereto, and the protection scope of the present disclosure shall be subject to the protection scope of the claims.

## Claims

1. A lawn mower, **characterized by** comprising:
a main body; and
a lifting and flipping assembly connected to the main body; the lifting and flipping assembly comprising:
a lifting assembly comprising a lifting drive device; and
a flipping assembly comprising a sliding base, a cutter support, and a connecting rod assembly;
wherein the sliding base is configured to perform lifting movement driven by the lifting drive device;
the cutter support is configured to be connected to a cutter assembly;
the connecting rod assembly is configured to connect the sliding base and the cutter support, and is configured to be controllably in a lifting state or a flipping state;
when the connecting rod assembly is in the lifting state, the cutter support is in an initial state;
when the connecting rod assembly is in the flipping state, the cutter support is in a flipping state.

2. The lawn mower according to claim 1, wherein the lifting assembly further comprises a lifting slide rail;
the sliding base is slidably connected to the lifting slide rail, and is configured to be movable along the lifting slide rail under the drive of the lifting drive device to realize lifting movement.

3. The lawn mower according to claim 2, wherein the flipping assembly further comprises a limit device; the limit device is disposed on at least one side of the lifting slide rail and is configured to define a lifting track and a flipping track; wherein
the sliding base is connected with a limit slider cooperating with the limit device;
when the limit slider is in the lifting track, the connecting rod assembly is in the lifting state, and the cutter support is in the initial state;
when the limit slider is in the flipping track, the connecting rod assembly is in the flipping state, and the cutter support is in the flipping state.

4. The lawn mower according to claim 3, wherein the limit device comprises a limit block disposed on at least one side of the lifting slide rail;
the connecting rod assembly comprises a main connecting rod, a first connecting rod and a second connecting rod;
the main connecting rod has a first connecting end and a second connecting end, the first connecting end is hinged to the cutter support;
the first connecting rod has a third connecting end and a fourth connecting end, the third connecting end is hinged to both the second connecting end and the sliding base;
the second connecting rod has a fifth connecting end and a sixth connecting end, the fifth connecting end is hinged to the fourth connecting end, and the sixth connecting end is connected to the cutter support; and
the first connecting rod comprises a limit fitting portion cooperating with the limit block, the limit fitting portion is configured to be rotatable around the limit block.

5. The lawn mower according to claim 4, wherein the limit fitting portion is a limit groove, the first connecting rod further comprises a protruding portion protruding toward the limit block;
the limit slider is disposed on the protruding portion, and the limit slider is disposed opposite to the limit block.

6. The lawn mower according to claim 5, wherein a hinged position between the third connecting end and the second connecting end is located at the limit groove;
when the limit groove rotates around the limit block, the main connecting rod and the second connecting rod move relative to each other to push the cutter support to flip.

7. The lawn mower according to any one of claims 4 to 6, wherein the cutter support is connected with a first self-locking structure; the first connecting end is provided with a second self-locking structure cooperating with the first self-locking structure;
when the cutter support is in the initial state, the first self-locking structure and the second self-locking structure achieve self-locking.

8. The lawn mower according to claim 7, wherein the first self-locking structure comprises a self-locking pin and a spring supporting the self-locking pin, the self-locking pin is provided with a first latching portion;
the second self-locking structure is provided with a second latching portion latched with the first latching portion.

9. The lawn mower according to claim 7, wherein the connecting rod assembly further comprises: a third connecting rod;
the third connecting rod has a seventh connecting end and an eighth connecting end, the seventh connecting end is hinged to the sixth connecting end, and the eighth connecting end is hinged to the first connecting end.

10. The lawn mower according to claim 9, wherein the third connecting rod is provided with a pushing portion disposed toward the first self-locking structure;
when the limit slider moves to the limit block and is subjected to force, the first connecting rod, the second connecting rod and the third connecting rod are subjected to a force, the pushing portion pushes the first self-locking structure to unlock the first self-locking structure and the second self-locking structure.

11. The lawn mower according to claim 3, wherein the limit device comprises a limit slide rail disposed on at least one side of the lifting slide rail, the limit slide rail has a straight portion and a bent portion, being respectively configured to define the lifting track and the flipping track;
the limit slider is slidably connected to the limit slide rail.

12. The lawn mower according to claim 11, wherein the connecting rod assembly comprises: a fourth connecting rod and a fifth connecting rod;
the fourth connecting rod has a ninth connecting end and a tenth connecting end that are opposite to each other; the ninth connecting end is slidably connected to the limit slide rail and comprises the limit slider, the tenth connecting end is hinged to the cutter support;
the fifth connecting rod has an eleventh connecting end and a twelfth connecting end that are opposite to each other; the eleventh connecting end is hinged to the sliding base, and the twelfth connecting end is hinged to the cutter support; and
a middle portion of the fourth connecting rod is provided with a shaft hole, the sliding base is connected with a sliding base connecting rod, and an end of the sliding base connecting rod is hinged to the shaft hole.

13. The lawn mower according to claim 3, wherein the limit device comprises a limit sliding slot disposed on at least one side of the lifting slide rail, the limit sliding slot has an opening portion configured to define the flipping track.

14. The lawn mower according to claim 13, wherein the limit slider is slidably connected to the lifting slide rail;
the connecting rod assembly comprises: a sliding rod, a sixth connecting rod and a seventh connecting rod;
the sliding rod has a thirteenth connecting end, a fourteenth connecting end, and a sliding guide portion disposed between the thirteenth connecting end and the fourteenth connecting end; the thirteenth connecting end and the fourteenth connecting end are opposite to each other, and the thirteenth connecting end is hinged to an end of the limit slider;
the sixth connecting rod has a fifteenth connecting end and a sixteenth connecting end, the fifteenth connecting end is hinged to the fourteenth connecting end, and the sixteenth connecting end is hinged to the cutter support; and
the seventh connecting rod has a fifteenth connecting end and a sixteenth connecting end, the fifteenth connecting end is fixed to the sliding base and slidably connected to the sliding guide portion, and the sixteenth connecting end is hinged to the cutter support.

15. The lawn mower according to claim 14, wherein the sliding rod is provided with a limit rotation block cooperating with the opening portion;
when the limit rotation block moves to the opening portion, the fifteenth connecting end of the seventh connecting rod slides along the sliding guide portion, the sliding rod drives the limit rotation block to rotate within the opening portion, and the cutter support flips.

16. The lawn mower according to any one of claims 1 to 6, wherein the lifting drive device comprises a drive motor and a lead screw connected to an output end of the drive motor;
the sliding base is provided with a transmission portion in a threaded connection with the lead screw.

17. The lawn mower according to claim 16, wherein the lifting drive device further comprises: an encoder;
the encoder is configured to record the number of revolutions of the drive motor for obtaining a state of the cutter support.

18. The lawn mower according to any one of claims 2 to 6, wherein the lifting slide rail comprises a slider slide rail, an optical axis slide rail or a sliding slot slide rail.

19. The lawn mower according to any one of claims 1 to 6, further comprising: a cutter assembly and a sensor; wherein
the cutter assembly is connected to the cutter support; and
the sensor is disposed on the lifting assembly or the flipping assembly, and is configured to detect a state of the cutter assembly.
